# NEUE EUROPÄISCHE PATENTSCHRIFT

(11) **EP 1 066 170 B2**
(45) Veröffentlichungstag und Bekanntmachung des Hinweises auf die Entscheidung über den Einspruch: **31.10.2007**
(45) Hinweis auf die Patenterteilung: 10.11.2004
(21) Anmeldenummer: 00909072.1
(22) Anmeldetag: 15.01.2000
(51) Int. Cl.: B60N 2/235

(54) **RASTBESCHLAG FÜR FAHRZEUGSITZ**
DETENT FITTING FOR A VEHICLE SEAT
GARNITURE A CLIQUET POUR SIEGE DE VEHICULE

(30) Priorität: 28.01.1999 DE 19904300; 11.05.1999 DE 19921810; 19.06.1999 DE 19928148; 23.11.1999 DE 19956235
(43) Veröffentlichungstag der Anmeldung: 10.01.2001
(73) Patentinhaber: KEIPER GmbH & Co. KG, 67657 Kaiserslautern (DE)
(72) Erfinder: VOSSMANN, Gregor, D-48691 Vreden (DE); BECKER, Martin, D-42369 Wuppertal (DE); PETERS, Christoph, D-42929 Wermelskirchen (DE); KRUG, Diana, D-42899 Remscheid (DE); OSBAHR, Thorsten, D-45481 Mülheim an der Ruhr (DE)
(74) Vertreter: Held, Thomas
(86) Internationale Anmeldenummer: PCT/EP2000/000291
(87) Internationale Veröffentlichungsnummer: WO 2000/044582

(56) Entgegenhaltungen:
- EP-A- 0 694 434
- EP-A- 0 720 930
- EP-A- 0 770 514
- EP-A- 0 978 413
- EP-B- 0 878 345
- DE-A- 4 419 411
- DE-A- 4 441 159
- DE-A- 19 814 225
- DE-A- 19 832 028
- DE-A- 19 855 499
- FR-A- 2 771 687
- GB-A- 2 078 294
- JP-A- 579 415
- JP-A- 9 234 132
- JP-U- 5 315 529

## Beschreibung

Die Erfindung betrifft einen Rastbeschlag für einen Fahrzeugsitz, insbesondere für einen Kraftfahrzeugsitz, mit den Merkmalen des Oberbegriffs des Anspruches 1, wie er zum Beispiel aus der GB-A-2 078 294 bekannt ist.

Bei einem bekannten Rastbeschlag ist das Beschlagoberteil auf einem Lagerelement gelagert, das wiederum im Beschlagunterteil gelagert ist. Das in einem Bauraum zwischen dem Beschlagoberteil und dem Beschlagunterteil angeordnete und als komplizierter Kragenzug ausgebildete Lagerelement dient zugleich auch als Steuerscheibenelement zur Bewegung zweier Riegel, die zum Einrasten des Rastbeschlages in einer Führung geführt radial nach außen gedrückt werden. Das kombinierte Lager- und Steuerscheibenelement sitzt direkt auf einer Übertragungsstange, die nach dem Einbau des Rastbeschlages in einen Fahrzeugsitz zum Beschlag auf der anderen Seite und zu einer Einstellvorrichtung führt. Durch Drehung der Übertragungsstange dreht sich das Lager- und Steuerscheibenelement und bewegt dadurch die Riegel.

Ein vergleichbares Lagerprinzip ist aus der japanischen Gebrauchsmusterveröffentlichung JP-53-15529 Y bekannt, bei welchem das Beschlagoberteil und das Steuerscheibenelement auf einer Welle als gemeinsamen Lagerelement gelagert sind. Das für beide Bewegungsrichtungen der Riegel zuständige Steuerscheibenelement wird durch einen radial nach außen weisenden Arm bewegt.

Der Erfindung liegt die Aufgabe zu Grunde, einen Rastbeschlag der eingangs genannten Art zu verbessern. Diese Aufgabe wird erfindungsgemäß durch einen Rastbeschlag mit den Merkmalen des Anspruches 1 und durch einen Fahrzeugsitz mit den Merkmalen des Anspruches 10 gelöst. Vorteilhafte Ausgestaltungen sind Gegenstand der Unteransprüche.

Dadurch, daß die Führung zugleich das Lager für die Lagerung von Beschlagunterteil und Beschlagoberteil bildet, kann das Beschlagoberteil ohne ein Lagerelement als Zwischenlager direkt in oder auf dem Beschlagunterteil gelagert werden. Damit muß kein so kompliziert aufgebautes Lager- und Steuerscheibenelement mehr verwendet werden, was die Herstellung des Rastbeschlages vereinfacht und verbilligt. Da die Führung sich in aller Regel radial weiter nach außen erstreckt als das bekannte Lager- und Steuerscheibenelement, erfolgt eine Abstützung mit einem größeren Hebelarm, was die Herstellung des Rastbeschlages vereinfacht und verbilligt. Da die Führung sich in aller Regel radial weiter nach außen erstreckt als das bekannte Lager- und Steuerscheibenelement, erfolgt eine Abstützung mit einem größeren Hebelarm, was die Lagerkräfte reduziert. Die Führung ist vorzugsweise einstückig mit dem Beschlagunterteil ausgebildet, wodurch die Herstellung vereinfacht und die Stabilität erhöht wird, und im Beschlagoberteil gelagert.

Durch die erfindungsgemäße Lagerung über die Führung kann der im Zentrum des Rastbeschlags vorhandene Bauraum dazu benutzt werden, ein Steuerelement vorzusehen, das zum Antrieb auf einer Übertragungsstange angeordnet ist und die vorhandenen Riegel bewegt. Zur Unterstützung dieser Bewegung ist das Steuerelement (Exzenterscheibe) federbelastet, wobei zur Aufbringung der notwendigen Kraft vorzugsweise für jeden vorhandenen Riegel eine Feder vorgesehen ist. Zur Bewegung der Riegel in die Richtung entgegen der Federbelastung ist es von Vorteil, wenn auf der Übertragungsstange noch eine Steuerscheibe angeordnet ist.

Es ist eine Steuerscheibe zum Zusammenwirken mit jedem vorhandenen Riegel vorgesehen, welche seitlich zur Bewegungsrichtung des Riegels an diesen anliegt und über Vorsprünge (Rastnasen) und Kulissen die Bewegung des Riegels steuert, insbesondere beim Entriegeln. Die Steuerscheibe ist vorzugsweise in Richtung auf den Riegel zu vorgespannt, also bei einem radial beweglichen Riegel in axialer Richtung vorgespannt. Dadurch ist gewährleistet, daß die Steuerscheibe in Anlage an den Riegel bleibt und damit die Vorsprünge und Kulissen zur Steuerung der Bewegung in Eingriff bleiben. Die Vorspannung wird vorzugsweise durch eine oder mehrere federnde Zungen erreicht, welche aus der Steuerscheibe herausgebogen sind und zugleich als Toleranzausgleichsmittel wirken.

Für ein sicheres Einrasten des Rastbeschlags wirkt ein an einem Beschlagteil auf einer Begrenzungsfläche ausgebildeter Zahnkranz mit den als Zahnsegment ausgebildeten Riegeln zusammen. Für ein einfache Herstellung ist es von Vorteil, wenn diese den Zahnkranz aufweisende Begrenzungsfläche zugleich die Anlagefläche für die Führung bildet. Um eine möglichst gute Lagerung zu bewirken, liegt vorzugsweise über den größten Teil des Winkelbereichs in Umfangsrichtung die Führung an der Begrenzungsfläche an. Ausgesparte Winkelbereiche sind beispielsweise für die Zahnsegmente oder zur Unterbringung von Federn freigehalten.

Bei einer bevorzugten Ausführungsform sind Mittel zum Ausgleich von Toleranzen vorgesehen, wodurch ein sicheres Verriegeln des Rastbeschlags erreicht wird. Wenn auf jeder Seite des Fahrzeugsitzes ein Rastbeschlag vorgesehen ist und eine gemeinsame Betätigung über eine Stange erfolgt, sorgen die Toleranzausgleichsmittel beispielsweise dafür, daß beide Beschläge verriegeln, unabhängig davon, ob durch ein gewollt ausgebildetes oder durch Fertigungstoleranzen entstandenes Spiel innerhalb eines Beschlags oder zwischen beiden Beschlägen unterschiedliche Zahnstellungen in den Rastbeschlägen auftreten. Die Toleranzausgleichsmittel können beispielsweise auch Toleranzen innerhalb eines Beschlags ausgleichen. Die verschiedenen Toleranzausgleichsmittel, die möglich sind, können einzeln oder in beliebigen Kombinationen vorgesehen sein. Vorzugsweise bewegt ein Steuerelement die vorhandenen Riegel, wobei das Steuerelement durch eine Stange bewegt wird, welche die Bewegung des Steuerelementes von einer Fahrzeugsitzseite auf die andere Fahrzeugsitzseite überträgt. Dies bewirkt eine synchrone Betätigung aller vorhandener Riegel. Um Torsionen der Stange auszugleichen, ist vorzugsweise zwischen der Stange und dem Steuerelement ein Spiel vorgesehen. Für eine einfachere Herstellung ist es von Vorteil, wenn das Spiel zwischen einem auf der Stange angeordneten, gesondert hergestellten, aber im Vergleich zur Stange kurzen Übertragungselement und dem Steuerelement vorgesehen ist.

Als weiteres Toleranzausgleichsmittel kann das als Exzenterscheibe ausgebildete Steuerelement mit einem Spannkurvenbereich für jeden vorhandenen Riegel versehen sein, wobei jeder Spannkurvenbereich sich leicht spiralförmig nach außen erstreckt, mit immer größerem Radius. Ein bereits teilweise eingefallener Riegel wird dadurch sicher gehalten, bis auch die anderen Riegel eingefallen sind. Eine bessere Kraftübertragung wird durch Steuernocken auf den Riegeln erreicht, die mit dem jeweiligen Spannkurvenbereich zusammenwirken.

Bei einer weiteren, bevorzugten Ausführungsform weist der Rastbeschlag ein Mittel auf, das ein Wirksamwerden des Riegels auf bestimmte Winkelstellungen zwischen Beschlagoberteil und Beschlagunterteil beschränkt. Der Rastbeschlag kann dadurch bei Fahrzeugsitzen eingesetzt werden, deren Rückenlehne nach dem Entriegeln freischwenkbar und/oder in eine Liegestellung schwenkbar sein soll, ohne daß während des Schwenkens ständig die Entriegelungsvorrichtung betätigt oder gehalten werden muß. Dadurch wird die vorderste bzw. hinterste Winkelstellung der Rückenlehne leicht erreicht und kann auch wieder leicht verlassen werden. In der Liegestellung wird zudem sichergestellt, daß die Rückenlehne aufliegt und die Last nicht über einen versehentlich knapp oberhalb der Liegestellung verriegelten Rastbeschlag mit ungünstigem Hebelarm übertragen wird.

Vorzugsweise wirkt der Riegel zum Verriegeln mit einem der Beschlagteile zusammen und das Mittel hält den Riegel außerhalb der bestimmten Winkelstellungen von diesem Beschlagteil fern. Dies kann beispielsweise durch ein Rückhalte- oder Rückholmittel, eine Kulissenführung, einzelne Anschläge, Nocken oder durch eine Anschlagsbahn erfolgen, die sich über mehrere zusammenhängende Winkelstellungen hinweg erstreckt. Bei einem radial wirksamen Riegel wirkt die Anschlagsbahn vorzugsweise mit einer axial abstehenden Nase des Riegels zusammen, um nicht direkt im Verriegelungskraftfluß zu stehen und die zum Verriegeln wirksame Fläche des Riegels, beispielsweise eine Verzahnung, zu schonen. Es ist dann von Vorteil, wenn die Anschlagsbahn radial unterschiedlich weit außen gelegene Teilbereiche aufweist, welche als Anschläge für die axial abstehende Nase dienen können.

Die Anschlagsbahn ist vorzugsweise am Beschlagoberteil vorgesehen, da dann die Anschlagsbahn über die verschiedenen Winkelstellungen hinweg mit dem Beschlagoberteil mitgedreht wird und daher einfacher ausgebildet werden kann. In Abhängigkeit von der Anzahl der Riegel ist die Anschlagsbahn entsprechend rotationssymmetrisch gestaltet.

Um unterschiedliche, individuell angepaßte Anschlagsbahnen zur Verfügung zu haben, die leicht ausgetauscht oder auf Wunsch weggelassen werden können, ist es von Vorteil, wenn die Anschlagsbahn an einem gesondert ausgebildeten Teil vorgesehen ist, welches verdrehsicher am Beschlagoberteil angeordnet ist. Bei einer einfach herzustellenden Verdrehsicherung weist das gesondert ausgebildete Teil Vorsprünge und/oder Aufnahmen auf, die mit entsprechenden Aufnahmen bzw. Vorsprüngen des Beschlagoberteils zusammenwirken. Um bisher verwendete Teile weiter verwenden zu können, um die Bautiefe nicht zu erhöhen und um gegebenenfalls keine Anschlagsbahn vorzusehen, ist es von Vorteil, wenn das gesondert ausgebildete Teil beispielsweise ein Ring ist, der in einer Vertiefung des Beschlagoberteils sitzt.

Bei einem weiteren, bevorzugten Ausführungsbeispiel weist der Rastbeschlag ein Element auf, das entweder an das Beschlagunterteil oder an das Beschlagoberteil koppelbar ist. Dadurch ist ein Freischwenken einer angebrachten Rückenlehne mit Memory-Funktion möglich, d.h. nach dem Freischwenken wird wieder die eingestellte Position erreicht. Durch die direkte Lagerung von Beschlagunterteil und Beschlagoberteil auf der Führung ohne Zwischenlager muß kein so kompliziert aufgebautes Lager- und Steuerscheibenelement mehr verwendet werden, was die Herstellung des Rastbeschlages vereinfacht und verbilligt. Da die Führung sich in aller Regel radial weiter nach außen erstreckt als das bekannte Lager- und Steuerscheibenelement, erfolgt eine Abstützung mit einem größeren Hebelarm, was die Lagerkräfte reduziert.

Die Kopplung an die Beschlagteile kann durch Arme, beispielsweise Federarme, erfolgen. Diese Arme sind vorzugsweise durch ein gemeinsames Schaltblech von dem jeweiligen Beschlagteil abkoppelbar. Zur Betätigung des Schaltblechs ist vorzugsweise eine drehbare Betätigungsbuchse vorgesehen, die mit dem innerhalb des Rastbeschlags angeordneten Schaltblech und mit einem außerhalb des Rastbeschlags angeordneten Hebel drehfest verbunden ist. Zum Ausgleich axialer Toleranzen können dritte Federarme vorgesehen sein.

Vorzugsweise weist der Riegel eine Nase auf, und es ist ein Kulissenblech mit einem Absatz vorgesehen, über welchen die Nase während eines Freischwenkens des Rastbeschlags bewegt wird, damit der Riegel nicht einfällt. Um die Nase beim Verriegeln des Rastbeschlags aufzunehmen, kann das Kulissenblech eine Aussparung aufweisen. Dieses Kulissenblech bildet vorzugsweise zugleich das koppelbare Element mit den genannten Armen.

Ein erfindungsgemäßer Fahrzeugsitz weist wenigstens einen, vorzugsweise zwei der erfindungsgemäßen Rastbeschläge auf, die über die Übertragungsstange miteinander verbunden sind.

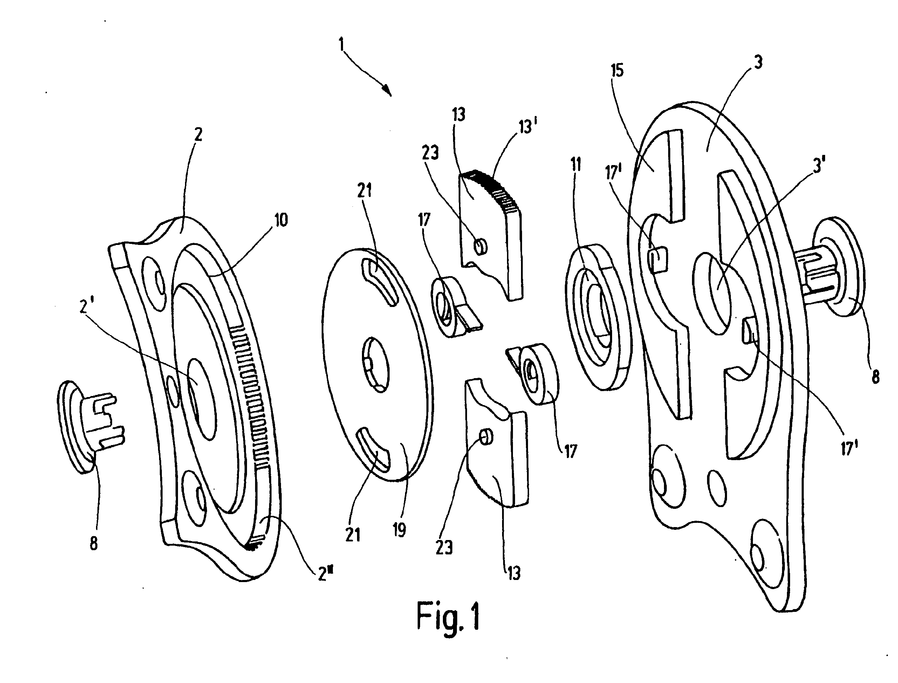

Im folgenden ist die Erfindung anhand von vier in der Zeichnung dargestellten Ausführungsbeispielen näher erläutert. Es zeigen
- Fig. 1: perspektivische Ansichten der einzelnen Bauteile des ersten Ausführungsbeispiels, bei denen die beiden Bauteile links aus einer anderen Perspektive als die anderen Bauteile dargestellt sind,

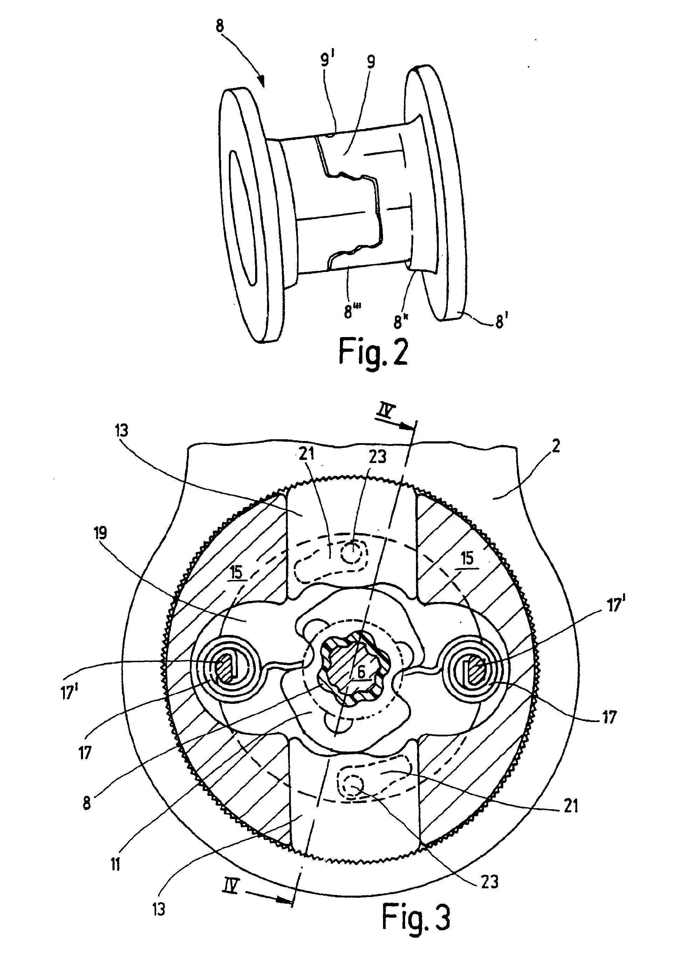

- Fig. 2: eine perspektivische Ansicht einer Axialsicherung,
- Fig. 3: einen Radialschnitt durch das Ausführungsbeispiel entlang der Linie III-III in Fig. 4,
- Fig. 4: einen Axialschnitt durch das Ausführungsbeispiel entlang der Linie IV-IV in Fig. 3,

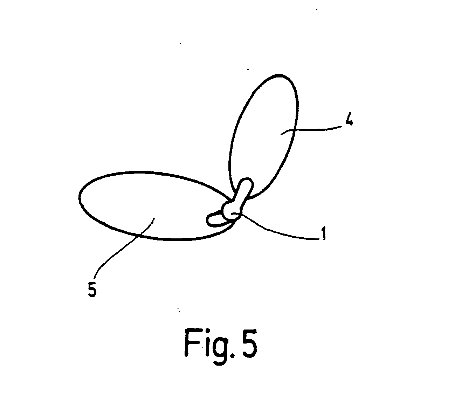

- Fig. 5: eine schematische Teilansicht eines erfindungsgemäßen Fahrzeugsitzes,

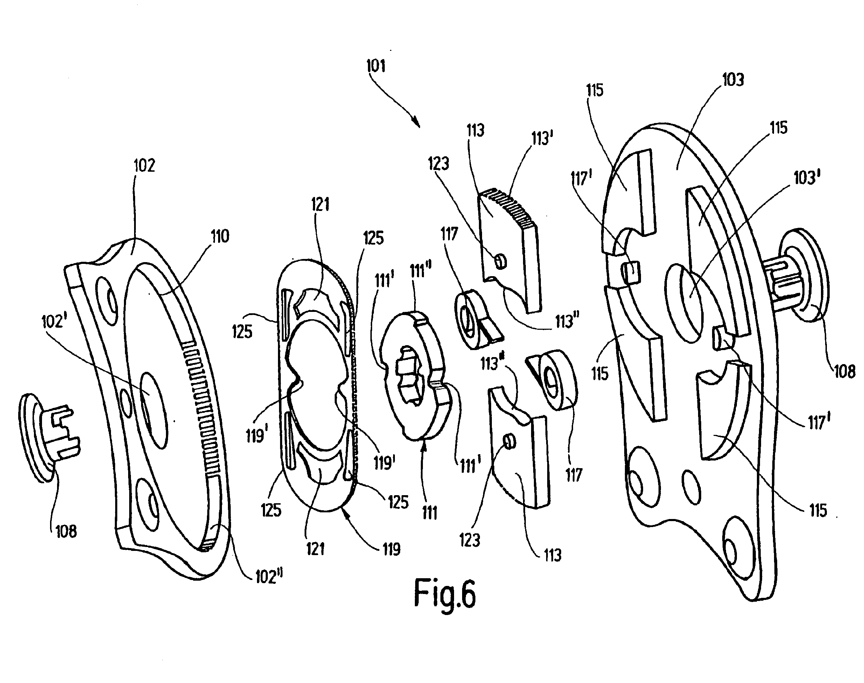

- Fig. 6: eine Explosionsdarstellung der einzelnen Bauteile des zweiten Ausführungsbeispiels, bei denen die beiden Bauteile links aus einer anderen Perspektive als die anderen Bauteile dargestellt sind,
- Fig. 7: einen Radialschnitt durch das zweite Ausführungsbeispiel im verriegelten Zustand,
- Fig. 8: einen Radialschnitt entsprechend Fig. 7 im entriegelten Zustand,

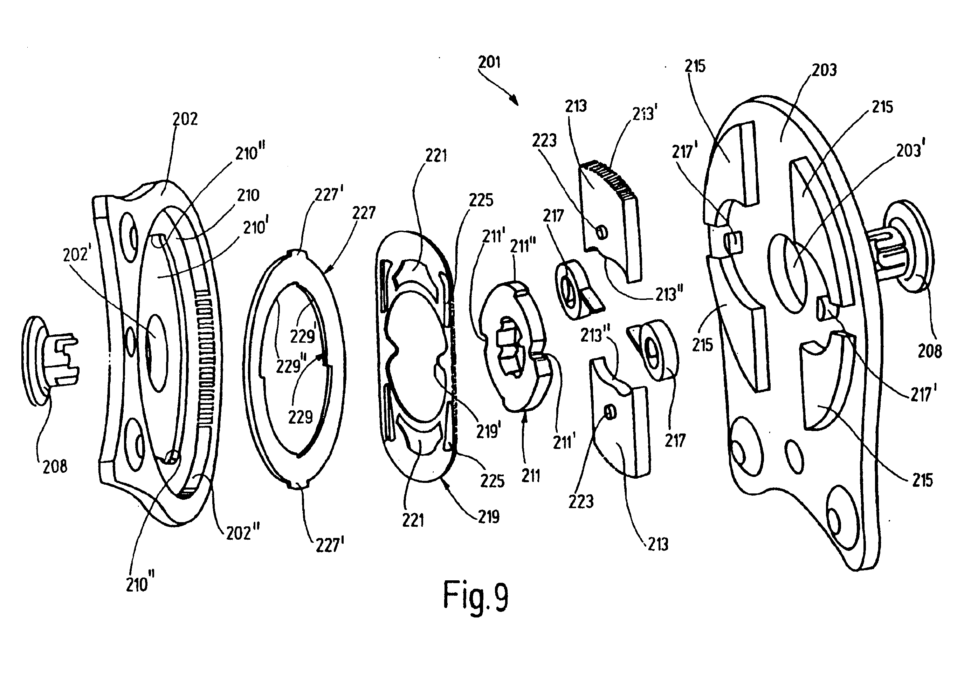

- Fig. 9: eine Explosionsdarstellung der einzelnen Bauteile des dritten Ausführungsbeispiels, bei denen die drei Bauteile links aus einer anderen Perspektive als die anderen Bauteile dargestellt sind,

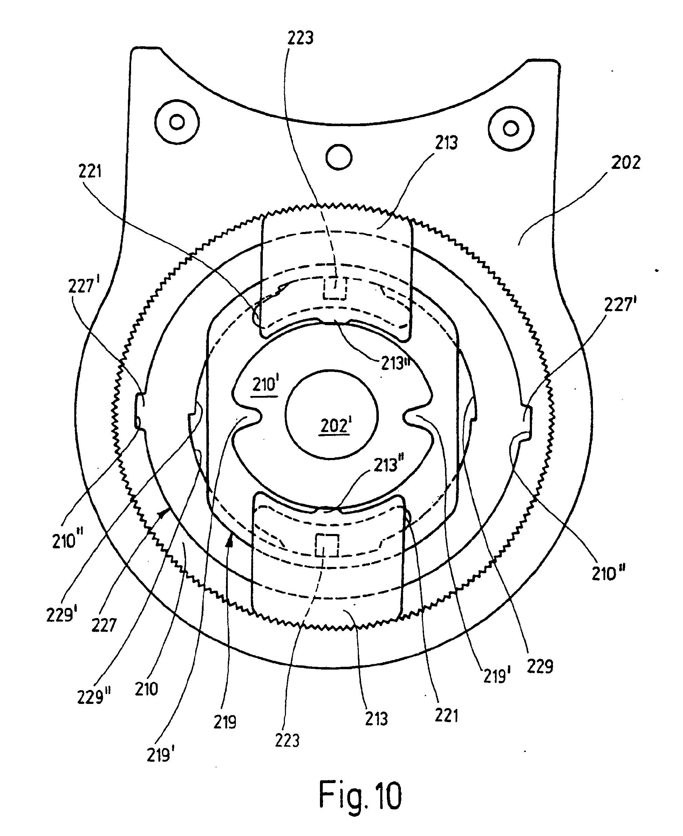

- Fig. 10: eine Ansicht der Innenseite des Beschlagoberteils des dritten Ausführungsbespiels mit Ring, Steuerscheibe und Zahnsegmenten,

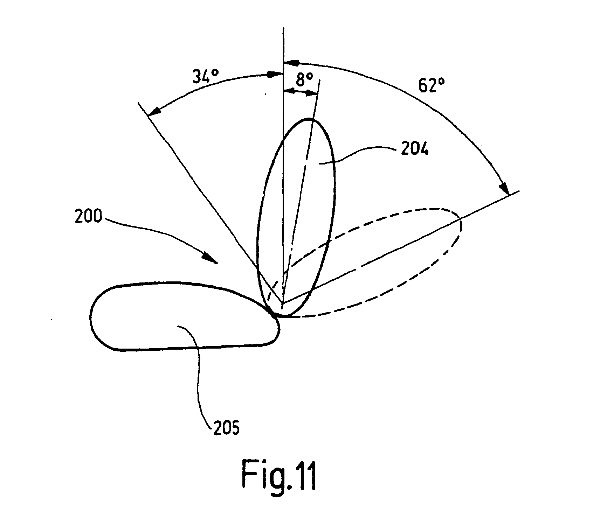

- Fig. 11: eine Seitenansicht des beispielhaften Fahrzeugsitzes gemäß dem dritten Ausfürhungsbeispiel mit unterschiedlich geneigter Rückenlehne,

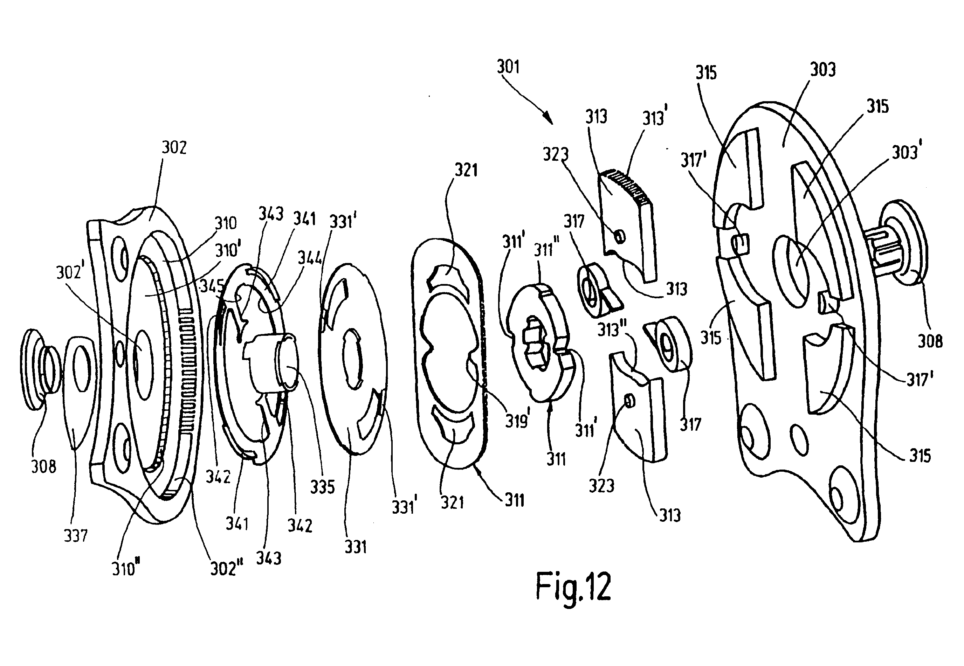

- Fig. 12: eine Explosionsdarstellung der einzelnen Bauteile des vierten Ausführungsbeispiels, bei denen die sechs Bauteile links aus einer anderen Perspektive als die anderen Bauteile dargestellt sind, und

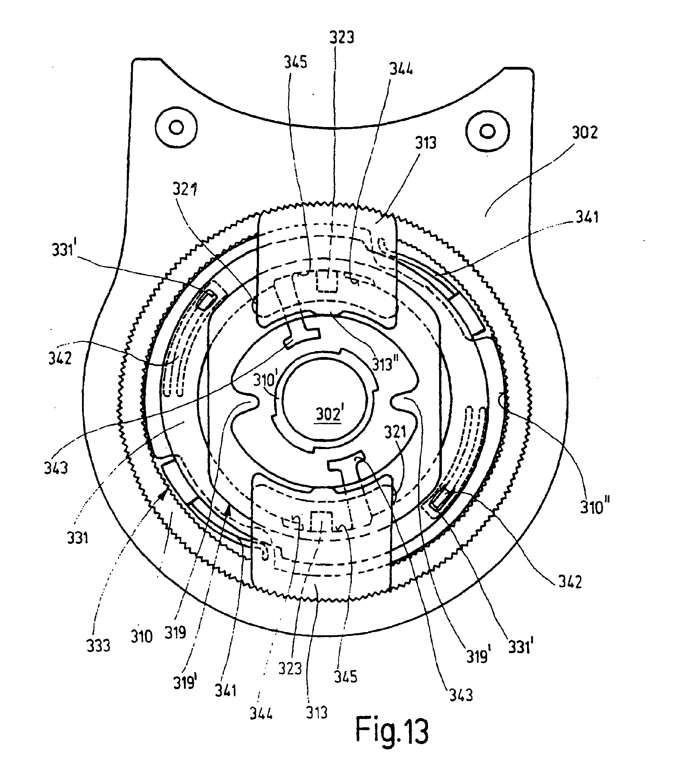

- Fig. 13: eine Ansicht der Innenseite des Beschlagoberteils mit Kulissenblech, Schaltblech, Steuerscheibe und Zahnsegmenten gemäß dem vierten Ausführungsbeispiel.

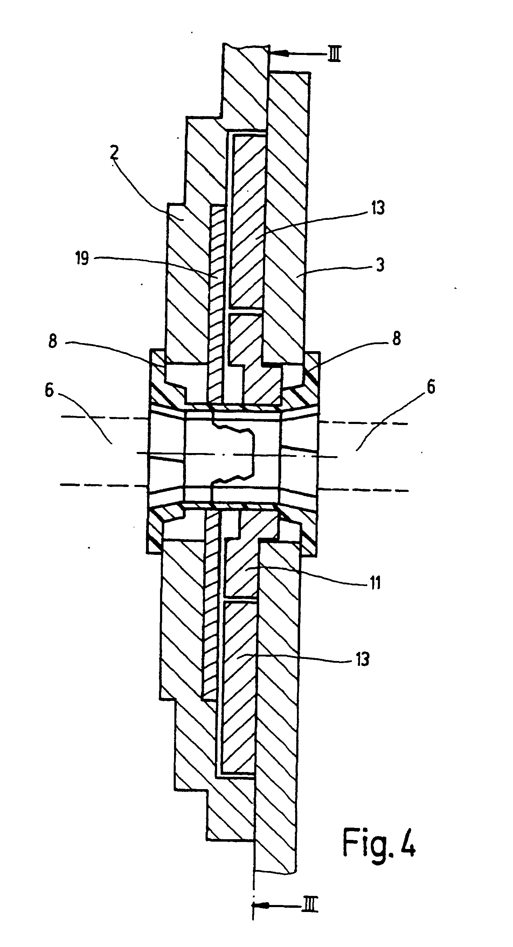

Das erste Ausführungsbeispiel betrifft einen als Ganzes mit 1 bezeichneten Rastbeschlag eines Fahrzeugsitzes für ein Kraftfahrzeug, der ein Beschlagoberteil 2 und ein Beschlagunterteil 3 umfaßt. Auf den beiden Seiten des Fahrzeugsitzes ist je ein Rastbeschlag 1 angeordnet. Die am Beschlagoberteil 2 befestigte Rückenlehne 4 ist über die beiden Rastbeschläge 1 an der Sitzstruktur 5 des Fahrzeugsitzes angebracht. Die beiden Rastbeschläge 1 sind durch eine Übertragungsstange 6 miteinander verbunden, welche in Fig. 4 nur angedeutet ist.

Das Beschlagoberteil 2 und das Beschlagunterteil 3 sind jeweils in der Mitte eines scheibenförmigen Abschnittes mit einer Bohrung 2' bzw. 3' als Durchlaß für die Übertragungsstange 6 versehen. Durch die Bohrungen 2' und 3' ist von der Außenseite des Beschlagteils 2 bzw. 3 her, also von der vom jeweils anderen Beschlagteil 3 bzw. 2 abgewandten Seite her, je eine Hälfte einer durchgängigen Axialsicherung 8 gesteckt. Die Axialsicherung 8 umschließt als Übertragungselement mit einem innen gelegenen Übertragungsprofil die ebenfalls profilierte Übertragungsstange 6.

Die beiden identisch aus Kunststoff ausgebildeten Hälften der Axialsicherung 8 weisen jeweils einen scheibenförmigen Flanschabschnitt 8' auf, der mit seiner ringförmigen inneren Stirnseite an der entsprechenden Außenseite der Beschlagteile 2 und 3 glatt anliegt. Der Flanschabschnitt 8' verhindert ein Verschieben der Axialsicherung 8 und zugleich bei der Montage und einem Transport des Rastbeschlags 1 auch ein Verschieben der Beschlagteile 2 und 3 in axialer Richtung, behindert aber nicht ein Verdrehen des Beschlagoberteils 2 relativ zum Beschlagunterteil 3. Für die Übertragung der beim Gebrauch des Rastbeschlags 1 auftretenden Axialkräfte sind in der Zeichnung nicht dargestellte Haltebleche vorgesehen. Der Flanschabschnitt 8' wirkt auch als Dichtung gegen Lackeintritt bei einer Tauchlackierung des Rastbeschlags 1.

Zur inneren Stirnseite des Flanschabschnitts 8' hin schließt sich ein leicht konischer Zwischenabschnitt 8" an, der kleinere Durchmesser als der Flanschabschnitt 8' aufweist, also gegenüber diesem radial zurückgesetzt ist. Der Zwischenabschnitt 8" weist auch einen kleineren Durchmesser als die Bohrungen 2' bzw. 3' der Beschlagteile 2 bzw. 3 auf, so daß diese nicht auf dem Zwischenabschnitt 8" aufsitzen.

Zur inneren Stirnseite des Zwischenabschnitts 8" hin schließt sich an den verjüngten Zwischenabschnitt 8" ein Übertragungsabschnitt 8"' an, der sowohl auf seiner radial äußeren Fläche wie auch auf seiner radial inneren Fläche profiliert ist. Mit seiner radial inneren Fläche liegt der Übertragungsabschnitt 8"' an der Übertragungsstange 6 an. Zur eindeutigen Montage können die Profile von Übertragungsstange 6 und Übertragungsabschnitt 8''' nicht-rotationssymmetrisch sein.

In axialer Richtung weist der Übertragungsabschnitt 8"' drei fingerförmige Vorsprünge 9 mit drei Aussparungen 9' von gleicher Form auf, die alle an ihren Rändern mit einer sägezahnartigen, groben Verzahnung versehen sind. Die beiden Hälften der Axialsicherung 8 werden beim Zusammenbau um 60° versetzt mit den Übertragungsabschnitten 8"' zusammengesteckt, so daß jeder fingerförmige Vorsprung 9 in eine Aussparung 9' der gegenüberliegenden Hälfte zu liegen kommt. Die sägezahnartigen Zähne der Verzahnung weisen mit ihren kurzen Flanken zum jeweiligen Flanschabschnitt 8', wobei die kurzen Flanken leicht hakenförmig ausgebildet sind. Beim Zusammenstecken der beiden Hälften der Axialsicherung 8 werden aufgrund der Elastizität des Kunststoffmaterials die kurzen Flanken der sägezahnartigen Zähne der Verzahnung federnd übereinander geschoben, um dann einander zu hintergreifen, so daß durch die Verzahnung eine Clip-Verbindung gebildet wird.

Das Beschlagoberteil 2 weist auf seiner dem Beschlagunterteil 3 zugewandten Innenseite um die Bohrung 2' herum eine ringförmige Vertiefung auf. Durch diese Vertiefung ist ein Bauraum 10 zwischen beiden Beschlagteilen 2 und 3 definiert, innerhalb dessen mehrere nachfolgend beschriebene Teile angeordnet sind. Die im Beschlagoberteil 2 ausgebildete, in Umfangsrichtung verlaufende Begrenzungsfläche des Bauraumes 10 ist mit 2" bezeichnet.

Eine Exzenterscheibe 11 in Form einer kreisförmigen Scheibe mit zwei um 180° versetzten Nocken am Außenumfang sitzt innerhalb des Bauraumes 10 auf der Axialsicherung 8. Die zusammengeclipsten Übertragungsabschnitte 8"' der Axialsicherung 8 greifen dabei verdrehsicher in die Lageröffnung der Exzenterscheibe 11 ein, so daß die Exzenterscheibe 11 mittels der als Übertragungselement wirkenden Axialsicherung 8 durch die Übertragungsstange 6 drehbar ist. Über einen in axialer Richtung vorstehenden Absatz ist die Exzenterscheibe 11 in der Bohrung 3' des Beschlagunterteils 3 gelagert.

In der gleichen Ebene wie die Exzenterscheibe 11, aber mit größerem radialen Abstand zur Axialsicherung 8, sind zwei flache Zahnsegmente 13 als Riegel innerhalb des Bauraumes 10 angeordnet, die um 180° versetzt (d.h. punktsymmetrisch zueinander) in radialer Richtung beweglich sind. Jedes Zahnsegment 13 trägt an seinem radial äußeren Ende auf seinem Rand eine Verzahnung 13' und ist an seinem radial inneren Ende am Rand mit einem Spannkurvenprofil versehen, welches mit der als Steuerelement wirkenden Exzenterscheibe 11 zusammenwirkt. Zwischen der Verzahnung 13' und dem Spannkurvenprofil verlaufen die Randflächen des Zahnsegments 13 parallel zueinander.

Das Beschlagunterteil 3 weist eine in den Bauraum 10 vorspringende Führung 15 für die Zahnsegmente 13 auf. Die Führung 15 besteht aus zwei ungefähr C-förmigen, einander zugewandten Segmenten, die im äußeren Bereich einen Kanal für jeweils ein Zahnsegment 13 bilden und im inneren Bereich um die Axialsicherung 8 mit der Exzenterscheibe 11 herum Raum für jeweils eine Spiralfeder 17 bieten. Das Zahnsegment 13 liegt dabei mit seinen parallelen Randflächen an den Seitenwänden des Kanals an. Jede der beiden Spiralfedern 17 ist an ihrem inneren Ende an einem Zapfen 17' innerhalb des inneren Bereiches der Führung 15 und an ihrem äußeren Ende am Umfang der Exzenterscheibe 11 abgestützt.

Die Spiralfedern 17 drehen die als Steuerelement wirkende Exzenterscheibe 11 so, daß deren Nocken über das Spannkurvenprofil die Zahnsegmente 13 radial nach außen drükken.

Eine Mitnehmerscheibe, die im folgenden als Steuerscheibe 19 bezeichnet ist, ist innerhalb des Bauraumes 10 in einer flachen Vertiefung des Beschlagoberteils 2 zwischen der Ebene mit den Zahnsegmenten 13 und der um die Bohrung 2' herum gelegenen Materialpartie des Beschlagoberteils 2 angeordnet. Die Steuerscheibe 19 sitzt im Ausführungsbeispiel auf der Axialsicherung 8, kann aber auch auf einem Ansatz der Exzenterscheibe 11 gelagert sein. Die Steuerscheibe 19 dreht sich bei einer Drehung der Übertragungsstange 6 mit. Die kreisscheibenförmige Steuerscheibe 19 ist in ihrem radial äußeren Bereich um 180° versetzt mit zwei langlochförmigen Kulissen 21 versehen, welche auf ihrer radial äußeren Seite schräg zum Umfang der Steuerscheibe 19 verlaufen. Von jedem Zahnsegment 13 steht auf der dem Beschlagoberteil 2 zugewandten Seite eine Rastnase 23 ab, welche bei der Montage innerhalb einer Kulisse 21 zu liegen kommt.

Werden die Zahnsegmente 13 durch eine Drehung der Exzenterscheibe 11 radial nach außen gedrückt, dreht sich die Steuerscheibe 19 so mit, daß die Rastnasen 23 innerhalb der Kulissen 21 radial nach außen geschoben werden. Bei einer Drehung in der anderen Richtung zieht die Steuerscheibe 19 über ihre Kulissen 21 und über die Rastnasen 23 die Zahnsegmente 13 radial nach innen.

Die Führung 15 liegt im montierten Zustand des Rastbeschlags 1 mit ihrer in Umfangsrichtung äußeren Fläche an der Begrenzungsfläche 2" des Bauraumes 10 an, wodurch das Beschlagoberteil 2 direkt auf der Führung 15 und damit auf dem Beschlagunterteil 3 gelagert ist. Auf der Begrenzungsfläche 2" ist ein Zahnkranz ausgebildet, der mit der Verzahnung 13' der Zahnsegmente 13 zusammenwirkt, wenn die Zahnsegmente 13 durch die Exzenterscheibe 11 nach außen gedrückt werden. Sobald der Zahnkranz des Beschlagoberteils und die Verzahnung 13' des Zahnsegments 13 ineinander eingreifen, ist der Rastbeschlag 1 eingerastet, d.h. die beiden Beschlagteile 2 und 3 können nicht mehr relativ zueinander bewegt werden. Werden die Zahnsegmente 13 durch die Steuerscheibe 19 zurückgezogen, können die beiden Beschlagteile 2 und 3 relativ zueinander verdreht werden. Die Führung 15 gleitet dann entlang der Begrenzungsfläche 2" des Bauraumes 10.

In einer abgewandelten Ausführungsform weist nur ein Teil der Begrenzungsfläche 2" einen Zahnkranz auf. Die Zahnsegmente 13 können dann nur in bestimmten Winkelstellungen der Beschlagteile 2 und 3 einfallen, d.h. nur in diesen Winkelstellungen rastet der Rastbeschlag 1 ein.

Das zweite Ausführungsbeispiel betrifft einen Rastbeschlag 101, dessen Bauteile, soweit nicht nachfolgend anders beschrieben, mit dem ersten Ausführungsbeispiel übereinstimmen und sind daher mit um 100 höheren Bezugszeichen versehen.

Eine durch Verdrehen von Beschlagteilen 102 und 103 relativ zueinander in ihrer Neigung veränderliche Rückenlehne ist freischwenkbar, um den Zugang zur Rücksitzbank zur erleichtern. Eine Axialsicherung 108 ist in Bohrungen 102' und 103' der Beschlagteile 102 und 103 gelagert und umschließt als Übertragungselement mit einem innen gelegenen Übertragungsprofil eine ebenfalls profilierte Übertragungsstange 106. Zur eindeutigen Montage sind die Profile von Übertragungsstange 106 und Axialsicherung 108 nicht rotationssymmetrisch ausgebildet, im Ausführungsbeispiel nämlich im Querschnitt mit fünf Zähnen im Winkel von 60° zueinander.

Das Beschlagoberteil 102 weist auf seiner dem Beschlagoberteil 103 zugewandten Innenseite um die Bohrung 102' herum die ringförmige Vertiefung auf, die den Bauraum 110 definiert. Die im Beschlagoberteil 102 ausgebildete, in Umfangsrichtung verlaufende Begrenzungsfläche des Bauraumes 110 ist mit 102" bezeichnet und trägt wenigstens abschnittsweise eine Verzahnung. Eine Exzenterscheibe 111, die als Steuerelement wirkt, sitzt innerhalb des Bauraumes 110 auf der Axialsicherung 108. Zwei flache Zahnsegmente 113, die eine geringere Dicke als die Exzenterscheibe 111 aufweisen, sind mit größerem radialen Abstand zur Axialsicherung 108 innerhalb des Bauraumes 110 in der gleichen Ebene wie die Exzenterscheibe 111 angeordnet.

Die beiden Zahnsegmente 113 sind um 180° versetzt, in radialer Richtung beweglich und werden von vier Führungssegmenten 115 geführt. Jedes Zahnsegment 113 trägt an seinem radial äußeren Ende auf seinem Rand eine Verzahnung 113', die mit der Verzahnung auf der Begrenzungsfläche 102" des Bauraumes 110 zusammenwirkt. An seinem radial inneren Ende in der Mitte ist jedes Zahnsegment 113 mit einem radial nach innen weisenden Steuemocken 113" versehen, der mit der Kontur der Exzenterscheibe 111 zusammenwirkt. Die Exzenterscheibe 111 weist entlang ihres Umfangs von jeder der beiden Vertiefungen 111' aus zunächst einen Konturbereich mit ungefähr konstantem Radius, dann eine radial nach außen vorspringende Stufe und schließlich einen Spannkurvenbereich 111" auf, der sich zum Toleranzausgleich leicht spiralförmig nach außen erstreckt, mit immer größerem Radius. Am Ende eines solchen Spannkurvenbereichs 111" geht die Kontur der Exzenterscheibe 111 in die nächste Vertiefung 111' über, worauf sich der Konturverlauf um 180° versetzt wiederholt.

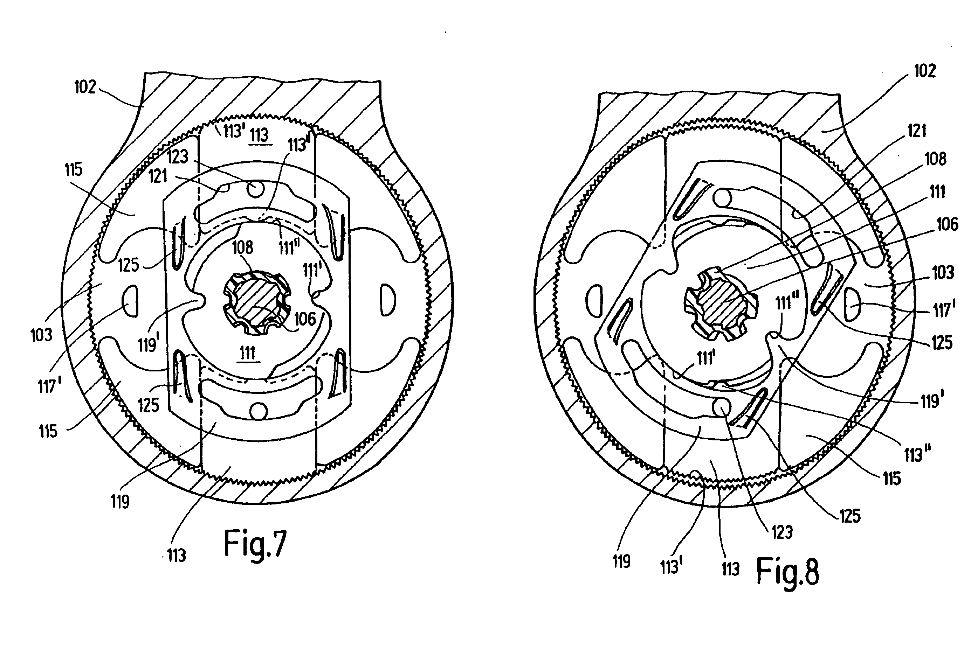

Die Führungssegmente 115 bilden in einem radial äußeren Bereich paarweise je einen Kanal für jeweils ein Zahnsegment 113, das mit parallelen Randflächen an den Seitenwänden des Kanals anliegt, und bieten im inneren Bereich senkrecht dazu Raum für jeweils eine Spiralfeder 117. Jede der beiden Spiralfedern 117 ist an ihrem inneren Ende an einem Zapfen 117' des Beschlagunterteils 103 und an ihrem äußeren Ende in Vertiefungen 111' am Umfang der Exzenterscheibe 111 abgestützt. In den Fig. 7 und 8 sind der Übersichtlichkeit halber die Zapfen 117' ohne die hierherum angeordneten Spiralfedern 117 dargestellt.

Eine Steuerscheibe 119 mit einer etwas länglichen Form ist innerhalb des Bauraumes 110 zwischen dem Beschlagoberteil 102 und den Zahnsegmenten 113 angeordnet. Die Steuerscheibe 119 ist in ihrer Mitte mit einer großen Öffnung versehen, mit der sie die Exzenterscheibe 111 umschließt. Zwei nach innen weisende, einander gegenüberliegende Mitnehmer 119' greifen in die beiden Aufnahmen 111' der Exzenterscheibe 111, wodurch die Steuerscheibe 119 verdrehsicher auf der Exzenterscheibe 111 gelagert ist. In ihrem radial äußeren Bereich ist die Steuerscheibe 119 um 180° versetzt mit zwei bogenförmigen Kulissen 121 versehen. Von jedem Zahnsegment 113 steht auf der dem Beschlagoberteil 102 zugewandten Seite axial eine Nase 123 ab, welche bei der Montage innerhalb einer Kulisse 121 zu liegen kommt. Der im folgenden relevante, radial weiter außen gelegene Rand der Kulissen 121 verläuft in einem mittleren Bereich mit konstantem Radius zum Mittelpunkt der Steuerscheibe 119 und seitlich davon über einen stufenförmigen Übergang nach innen versetzt näher zum Mittelpunkt hin.

Seitlich der beiden Kulissen 121 weist die achssymmetrisch ausgebildete Steuerscheibe 119 insgesamt vier federnde Zungen 125 auf, die so aus dem Material der Steuerscheibe 119 gestanzt sind, daß sie nur noch über eine Seite federnd mit dem übrigen Material verbunden sind, und die dann zum Beschlagoberteil 102 hin herausgedrückt sind. Die Steuerscheibe 119 wird durch die Zungen 125 axial vorgespannt, damit sie in Anlage an die Zahnsegmente 113 bleibt. Außerdem wird ein unerwünschtes Klappern vermieden.

Ausgehend vom entriegelten Zustand, wie er in Fig. 8 dargestellt ist, wird durch eine Drehung der Übertragungsstange 106 die Axialsicherung 108 mitgedreht. Zwischen dem Außenprofil der Axialsicherung 108 und dem Innenprofil der Exzenterscheibe 111 ist ein Spiel vorgesehen, das Toleranzen der beiden Beschläge 101 und Torsionen der Stange 106 ausgleicht. Die Exzenterscheibe 111 dreht sich daher verzögert mit der Axialsicherung 108 und der Stange 106 mit. Die Spiralfedern 117 unterstützen dabei die Drehung der Exzenterscheibe 111. Mit dem ansteigenden Übergang zu jedem der beiden Spannkurvenbereiche 111 " drückt die als Steuerstück wirkende Exzenterscheibe 111 auf den entsprechenden Steuernocken 113" des zugehörigen Zahnsegments 113, das dadurch radial nach außen gedrückt wird. Mit der Exzenterscheibe 111 dreht sich wegen der Mitnahme über die Vertiefungen 111' und die Nasen 119' auch die Steuerscheibe 119 mit. Dabei werden die Rastnasen 123 innerhalb der Kulissen 121 radial nach außen und zugleich in die Mitte der Kulissen 121 geschoben.

Sofern das Beschlagoberteil 102 so gedreht ist, daß seine Verzahnung passend zu der Verzahnung 113' der Zahnsegmente 113 steht, fallen die als Riegel wirkenden Zahnsegmente 113 ein und verriegeln den entsprechenden Rastbeschlag 101, wobei sie durch die Spannkurvenbereiche 111 " der Exzenterscheibe 111 gespannt werden. Steht bei einem der beiden Rastbeschläge 101 Zahn auf Zahn, so kann durch das vorgesehene Spiel zwischen der Exzenterscheibe 111 und der Axialsicherung 108 zunächst der Rastbeschlag 101 auf der anderen Fahrzeugsitzseite verriegeln. Durch die natürliche Bewegung des Sitzbenutzers wird bei dem nicht verriegelten Rastbeschlag 101 das Beschlagoberteil 102 relativ zum Beschlagunterteil 103 mitbewegt. Sobald eine Drehung um maximal eine halbe Zahnbreite erfolgt ist, können auch hier die Zahnsegmente 113 einfallen. Die unterschiedlichen Einfalltiefen der Zahnsegmenten 113 der beiden Rastbeschläge 101 werden durch die toleranzausgleichende Spiralform der Spannkurvenbereiche 111" ausgeglichen.

Von diesem, in Fig. 7 dargestellten, verriegelten Zustand aus wird zur Entriegelung die Stange 106 in die andere Richtung gedreht, wodurch über die Axialsicherung 108 die Exzenterscheibe 111 entgegen der Kraft der Spiralfedern 117 mitgenommen wird. Die Exzenterscheibe 111 dreht die Steuerscheibe 119, die über ihre Kulissen 121, insbesondere über den seitlichen Übergangsbereich zum radial weiter innen gelegenen Bereich, und weiter über die Rastnasen 123 die Zahnsegmente 113 radial nach innen zieht. Der Rastbeschlag 101 ist dann entriegelt, so daß das jeweilige Beschlagoberteil 102 relativ zum zugehörigen Beschlagunterteil 103 verdreht werden kann. Die Führungssegmente 115 liegen dabei mit ihrer in Umfangsrichtung äußeren Fläche an der Begrenzungsfläche 102" des Bauraumes 110 an, wodurch das Beschlagoberteil 102 direkt auf dem Beschlagunterteil 103 gelagert ist.

Im dritten Ausführungsbeispiel ist bei einem Fahrzeugsitz 200, der als Vordersitz eines zweitürigen Kraftfahrzeuges dient, ein als Ganzes mit 201 bezeichneter Rastbeschlag vorgesehen. Soweit nicht nachfolgend anders beschrieben, stimmen die Bauteile des Rastbeschlages 201 mit dem ersten Ausführungsbeispiel und dem zweiten Ausführungsbeispiel überein und sind daher mit um 100 bzw. 200 höheren Bezugszeichen versehen.

Das Beschlagoberteil 202 weist innerhalb einer ringförmigen Vertiefung, die den Bauraum 210 definiert, eine weitere Vertiefung 210' auf, welche den Baumraum 210 vergrößert. Die im Beschlagoberteil 202 ausgebildete, in Umfangsrichtung verlaufende Begrenzungsfläche des Bauraumes 210 ist mit 202" bezeichnet und trägt eine Verzahnung. Die Ausbildung des Beschlagunterteils 203 mit den Führungssegmenten 215 und den Zapfen 217', der Axialsicherung 208, der Exzenterscheibe 211, der Zahnsegmente 213 mit den Verzahnung 213', den Steuernocken 213" und den Nasen 223, der Spiralfedern 217 und der Steuerscheibe 219 mit den Mitnehmern 219', den Kulissen 221 und den Zungen 225 stimmt mit derjenigen der entsprechenden Bauteile des zweiten Beispiels überein. Die mit den Mitnehmern 219' zusammenwirkenden Vertiefungen der Exzenterscheibe 211 sind im folgenden als Aufnahmen 211' bezeichneten, die Spannkurvenbereiche der Exzenterscheibe 211 als Kontur 211".

Zwischen der Steuerscheibe 219 und dem Beschlagoberteil 202 ist innerhalb der Vertiefung 210' ein Ring 227 angeordnet, der mit zwei radialen Vorsprüngen 227' verdrehsicher in entsprechende Aussparungen 210" der Vertiefung 210' greift. Die Dicke des Rings 227 entspricht der Tiefe der Vertiefung 210'. Auf seiner radial innen gelegenen Berandung weist der Ring 227 eine Anschlagsbahn 229 auf, die mit den Nasen 223 der Zahnsegmente 213 zusammenwirkt. Die punktsymmetrische Anschlagsbahn 229 besteht aus einem radial weiter innen gelegenen ersten Teilbereich 229' und aus einem radial weiter außen gelegenen zweiten Teilbereich 229".

Ausgehend vom entriegelten Zustand wird durch eine Drehung der Übertragungsstange die Axialsicherung 208 gedreht, welche wiederum die Exzenterscheibe 211 mitdreht. Die Spiralfedern 217 unterstützen dabei die Drehung der Exzenterscheibe 211. Mit der Kontur 211 " drückt die als Steuerelement wirkende Exzenterscheibe 211 auf den entsprechenden Steuernocken 213" des zugehörigen Zahnsegments 213, das dadurch radial nach außen gedrückt wird. Mit der Exzenterscheibe 211 dreht sich wegen der Mitnahme über die Aufnahmen 211' und die Mitnehmer 219' auch die Steuerscheibe 219 mit. Dabei werden die Nasen 223 innerhalb der Kulissen 221 radial nach außen geschoben.

Sofern das Beschlagoberteil 202 und damit der Ring 227 sich relativ zum Beschlagunterteil 203 in einer derartigen Winkelstellung befindet, daß die Nasen 223 auf den radial weiter außen gelegenen zweiten Teilbereich 229" der Anschlagsbahn 229 ausgerichtet sind, fallen die als Riegel wirksam werdenden Zahnsegmente 213 ein und verriegeln den entsprechenden Rastbeschlag 201. Dieser Winkelstellung der Anschlagsbahn 229 entspricht einer Stellung der Rückenlehne 204 zwischen 8° und 62° von der Senkrechten aus gegen die Fahrrichtung nach hinten gemessen. Zur Entriegelung wird die Übertragungsstange in die andere Richtung gedreht, wodurch über die Axialsicherung 208 die Exzenterscheibe 211 entgegen der Kraft der Spiralfedern 217 mitgenommen wird. Die Exzenterscheibe 211 dreht die Steuerscheibe 219, die über ihre Kulissen 221 und weiter über die Nasen 223 die Zahnsegmente 213 radial nach innen zieht. Der Rastbeschlag 201 ist dann entriegelt, so daß das jeweilige Beschlagoberteil 202 relativ zum zugehörigen Beschlagunterteil 203 verdreht werden kann, um die Neigung der Rückenlehne 204 einzustellen. Die Führungssegmente 215 liegen dabei mit ihrer in Umfangsrichtung äußeren Fläche an der Begrenzungsfläche 202" des Bauraumes 210 an, wodurch das Beschlagoberteil 202 direkt auf dem Beschlagunterteil 203 gelagert ist.

Beim Freischwenken der Rückenlehne 204 werden durch Zug an einem nicht dargestellten Handhebel die Rastbeschläge 201 auf den beiden Seiten des Fahrzeugsitzes 200 zunächst entriegelt und dann das jeweilige Beschlagoberteil 202 und damit die Rückenlehne 204 relativ zum entsprechenden Beschlagunterteil 203 nach vorne geschwenkt. Sobald die Rückenlehne 204 weiter nach vorne geneigt ist als die vorgenannten 8° zur Senkrechten nach hinten, sind die Nasen 223 auf den radial weiter innen gelegenen ersten Teilbereich 229' der Anschlagsbahn 229 ausgerichtet. Wird nun der Handhebel losgelassen, werden die Zahnsegmente 213 durch die Kraft der Spiralfedern 217 nur soweit radial nach außen gedrückt, bis die Nasen 223 in Anlage an den radial weiter innen gelegenen, als Anschlag wirkenden, ersten Teilbereich 229' der Anschlagsbahn 229 gelangen. Die Zahnsegmente 213 sind dann mit ihrer Verzahnung 213' noch so weit von der Verzahnung des Beschlagoberteils 202 entfernt, daß sie nicht sperren können. Die Freischwenkbewegung ist beispielsweise durch einen nicht dargestellten Anschlag auf einen maximalen Winkel von 34° von der Senkrechten aus in Fahrtrichtung nach vorne begrenzt. Erst wenn beim Zurückschwenken der Rückenlehne 204 bei dem genannten Winkel von 8° nach hinten die Nasen 223 wieder auf den radial weiter außen gelegenen zweiten Teilbereich 229" der Anschlagsbahn 229 ausgerichtet sind, können die Zahnsegmente 213 wieder einfallen.

Entsprechend zur Situation beim Freischwenken wird zum Erreichen der Liegestellung der Rückenlehne 204 diese nach Entriegeln der Rastbeschläge 201 bei festgehaltenem Handhebel um mehr als 62° von der Senkrechten aus nach hinten geschwenkt. Sobald diese Winkelstellung überschritten worden ist, sind die Nasen 213 wieder auf den radial weiter innen gelegenen Teilbereich 229' der Anschlagsbahn 229 ausgerichtet, so daß ein Verriegeln der Zahnsegmente 213 nicht mehr möglich ist. Erst beim Vorschwenken erfolgt frühestens bei 62° ein erneutes Verriegeln.

In einer abgewandelten Form wird der Ring 227 nicht in den Rastbeschlag 201 eingelegt, so daß dieser dann wie der Rastbeschlag des zweiten Ausführungsbeispiels funktioniert.

Das vierte Ausführungsbeispiel betrifft als Ganzes mit 301 bezeichneten Rastbeschlag für einen Fahrzeugsitz, der als Vordersitz eines zweitürigen Kraftfahrzeuges dient. Soweit nicht nachfolgend anders beschrieben, stimmen die Bauteile des Rastbeschlages 301 mit dem dritten, zweiten und ersten Ausführungsbeispiel überein und sind daher mit um 100, 200 bzw. 300 höheren Bezugszeichen versehen.

Das Beschlagoberteil 302 und das Beschlagunterteil 303 sind mit Bohrungen 302' bzw. 303' versehen, durch welche eine Axialsicherung 308 gesteckt ist, die zugleich als Übertragungselement dient. Das Beschlagoberteil 302 weist innerhalb einer ringförmigen Vertiefung, die den Bauraum 310 definiert, eine weitere Vertiefung 310' auf, welche den Baumraum 310 vergrößert. Die im Beschlagoberteil 302 ausgebildete, in Umfangsrichtung verlaufende Begrenzungsfläche des Bauraumes 310 ist als erste Begrenzungsfläche mit 302" bezeichnet und trägt eine Verzahnung. Die in Umfangsrichtung verlaufende, weiter innen gelegene Begrenzungsfläche der Vertiefung 310' ist als zweite Begrenzungsfläche mit 310" bezeichnet und trägt ebenfalls eine Verzahnung. Eine Exzenterscheibe 311, die als Steuerelement wirkt, sitzt innerhalb des Bauraumes 310, in der Ebene mit der Begrenzungsfläche 302", auf der Axialsicherung 308.

Zwei flache, in radialer Richtung bewegliche Zahnsegmente 313 sind innerhalb des Bauraumes 310 angeordnet und werden von vier Führungssegmenten 315 geführt. Jedes Zahnsegment 313 trägt eine Verzahnung 313', die mit der Verzahnung auf der Begrenzungsfläche 302" zusammenwirkt, und einen Steuernocken 313", der mit einer Kontur 311 " der Exzenterscheibe 311 zusammenwirkt. Die Führungssegmente 315 bilden paarweise je einen Kanal für jeweils ein Zahnsegment 313 und bieten im inneren Bereich Raum für jeweils eine Spiralfeder 317. Jede der beiden Spiralfedern 317 ist an ihrem inneren Ende an einem Zapfen 317' des Beschlagunterteils 303 und an ihrem äußeren Ende in Aufnahmen 311' der Exzenterscheibe 311 abgestützt.

Eine Steuerscheibe 319 mit einer etwas länglichen Form ist innerhalb des Bauraumes 310 zwischen dem Beschlagoberteil 302 und den Zahnsegmenten 313 angeordnet. Die Steuerscheibe 319 ist verdrehsicher auf der Exzenterscheibe 311 gelagert, indem zwei Mitnehmer 319' in Aufnahmen 311' der Exzenterscheibe 311 greifen. In ihrem radial äußeren Bereich ist die Steuerscheibe 319 versetzt mit zwei bogenförmigen Kulissen 321 versehen, in welche bei der Montage jeweils eine Nase 323 eines Zahnsegmentes 313 zu liegen kommt.

Zwischen der Steuerscheibe 319 und dem Beschlagoberteil 302 sind innerhalb der Vertiefung 310' ein scheibenförmiges Schaltblech 331 und ein ringförmiges Kulissenblech 333 angeordnet. Das Schaltblech 331 sitzt, durch ineinander greifende Aussparungen drehfest, auf einer Betätigungsbuchse 335. Die Betätigungsbuchse 335 ist um die Axialsicherung 308 herum angeordnet und durch die Bohrung 302' zur Außenseite des Beschlagoberteils 302 geführt. Dort ist auf der Betätigungsbuchse 335 ein Hebel 337, durch entsprechend ineinander greifende Aussparungen drehfest, angebracht.

Das Kulissenblech 333 weist drei Paare von unterschiedlichen Federarmen 341, 342 und 343 auf, die innerhalb eines Paares jeweils einander radial gegenüberliegen. Die zungenförmigen ersten Federarme 341 sind am Außenumfang des Kulissenblechs 333 über etwa einen Winkelbereich von 60° hinweg ausgebildet, beispielsweise durch Umbiegen eines Teiles des äußeren Randbereichs. Die beiden ersten Federarme 341 wirken radial nach außen und befinden sich im verriegelten Zustand des Rastbeschlags 301 in einem Abstand zur Verzahnung auf der zweiten Begrenzungsfläche 210". Die beiden zweiten Federarme 342 sind gegenüber den ersten Federarmen 341 in Umfangsrichtung versetzt und radial weiter innen angeordnet. Die beiden zweiten Federarme 342 sind über etwa einen Winkelbereich von 60° hinweg in der Art gebogener Zungen ausgebildet, beispielsweise durch Herausdrücken aus dem Kulissenblech 333. Die beiden zweiten Federarme 342 wirken in axialer Richtung zum Beschlagunterteil 303 hin. Im verriegelten Zustand des Rastbeschlags 301 ragen die zweiten Federarme 341 durch Aussparungen 331' des Schaltblechs 331 hindurch und befinden sich dann in Eingriff mit Prägungen des Beschlagunterteils 303.

Die beiden dritten Federarme 343 sind gegenüber den ersten Federarmen 341 und den zweiten Federarmen 342 in Umfangsrichtung versetzt angeordnet und beispielsweise durch Ausstanzen hergestellt. Die dritten Federarme 343 ragen als einzelne Arme vom radial innen gelegenen Rand des ringförmigen Kulissenblechs 333 radial nach innen. Die dritten Federarme 343 gleichen Toleranzen des Rastbeschlags 301 in axialer Richtung aus und gewährleisten die richtige axiale Lage des Kulissenblechs 333. Zwischen einer Flanke jedes der dritten Federarme 343 und je einem Absatz 344 des radial innen gelegenen Randes des Kulissenblechs 333 ist jeweils eine Aussparung 345 vorgesehen. Im verriegelten Zustand des Rastbeschlags 301 greifen die Nasen 323 durch die Kulissen 321 der Steuerscheibe 319 und entsprechende Öffnungen des Schaltblechs 331 hindurch in die Aussparungen 345 des Kulissenblechs 333 ein.

Bei einer Feineinstellung des Rastbeschlags 301 bleiben der Betätigungshebel 337, die Betätigungsbuchse 335, das Schaltblech 331 und das Kulissenblech 333 in Ruhe. Ausgehend vom entriegelten Zustand wird durch eine Drehung der Übertragungsstange die Axialsicherung 308 gedreht, welche wiederum die Exzenterscheibe 311 mitdreht. Die Spiralfedern 317 unterstützen dabei die Drehung der Exzenterscheibe 311. Mit der Kontur 311 " drückt die als Steuerelement wirkende Exzenterscheibe 311 auf den entsprechenden Steuemocken 313" des zugehörigen Zahnsegments 313, das dadurch radial nach außen gedrückt wird. Mit der Exzenterscheibe 311 dreht sich wegen der Mitnahme über die Aufnahmen 311' und die Mitnehmer 319' auch die Steuerscheibe 319 mit. Dabei werden die Nasen 323 innerhalb der Kulissen 321 radial nach außen geschoben. Die als Riegel wirksam werdenden Zahnsegmente 313 fallen in die Verzahnung auf der ersten Begrenzungsfläche 302" ein und verriegeln den entsprechenden Rastbeschlag 301.

Zum Entriegeln wird die Übertragungsstange in die andere Richtung gedreht, wodurch über die Axialsicherung 308 die Exzenterscheibe 311 entgegen der Kraft der Spiralfedern 317 mitgenommen wird. Die Exzenterscheibe 311 dreht die Steuerscheibe 319, die über ihre Kulissen 321 und weiter über die Nasen 323 die Zahnsegmente 313 radial nach innen zieht. Der Rastbeschlag 301 ist dann entriegelt, so daß das jeweilige Beschlagoberteil 302 relativ zum zugehörigen Beschlagunterteil 303 verdreht werden kann, um die Neigung der Rükkenlehne einzustellen. Die Führungssegmente 315 liegen dabei mit ihrer in Umfangsrichtung äußeren Fläche an der ersten Begrenzungsfläche 302" des Bauraumes 310 an, wodurch das Beschlagoberteil 302 direkt auf dem Beschlagunterteil 303 gelagert ist.

Das Freischwenken der Rückenlehne wird durch Zug am Hebel 337 eingeleitet, welcher dann die Betätigungsbuchse 335 dreht. Die Betätigungsbuchse 335 dreht wiederum das Schaltblech 331 mit seinen Aussparungen 331'. Die zweiten Federarme 342 werden dadurch vom Beschlagunterteil 303 weg und aus den Aussparungen 331' des Schaltblechs 331 herausgedrückt, so daß die Kopplung zwischen dem Kulissenblech 333 und dem Beschlagunterteil 303 aufgehoben ist. Das Schaltblech 331 weist an seinem Außenumfang zwei Absätze auf, welche aufgrund der Drehung die ersten Federarme 341 in die Verzahnung der zweiten Begrenzungsfläche 310" drücken, um das Kulissenblech 333 an das Beschlagoberteil 302 zu koppeln und die momentane Stellung (Memoryposition) zu speichern. Zugleich nimmt das Schaltblech 331, beispielsweise über eine umgestellte Lasche, die Steuerscheibe 319 mit der Exzenterscheibe 311 mit. Die Zahnsegmente 313 werden dann, wie beim Entriegeln des Rastbeschlags 301 zur Feineinstellung, durch die Kulisse 321 der Steuerscheibe 319 zurückgezogen. Die beiden Nasen 323 gelangen aus den Aussparungen 345 des Kulissenblechs 333 heraus auf die beiden Absätze 344. Die Rückenlehne kann nun unter Verdrehen des Rastbeschlags 301, genauer gesagt des Beschlagoberteils 302 und des Kulissenblechs 333, vorgeschwenkt werden. Ein Anschlag verhindert, daß das Schaltblech 331 sich versehentlich zurückdreht.

Wird nun der Hebel 337 losgelassen, bleiben die Zahnsegmente 313 durch die Kraft der Spiralfedern 317 nur soweit radial nach außen gedrückt, wie es die Anlage der Nasen 323 am Rand der Kulissen 321 der Steuerscheibe 319 und an den Absätzen 344 der Kulissenscheibe 333 erlaubt. Die Zahnsegmente 313 sind dann mit ihrer Verzahnung 313' noch so weit von der Verzahnung auf der ersten Begrenzungsfläche 302" des Beschlagoberteils 302 entfernt, daß sie nicht sperren können. Die Zahnsegmente 313 werden dicht über der Verzahnung auf der ersten Begrenzungsfläche 302" des Beschlagoberteils 302 vorbeigeführt.

Wird die Rückenlehne wieder bis zu der voreingestellten Memoryposition zurückgeschwenkt, gelangen die Nasen 323 in einen breiteren Bereich der Kulissen 321 und in die Aussparungen 345 des Kulissenblechs 333, so daß sie von den Spiralfedern 317 radial nach außen gedrückt werden können, um den Rastbeschlag 301 zu verriegeln. Zugleich gelangen die ersten Federarme 341 von den Absätzen am Schaltblech 331 herunter und damit außer Eingriff mit dem Beschlagoberteil 302. Die zweiten Federarme 342 können wieder durch die Aussparungen 331' des Schaltblechs 331 greifen und in Eingriff mit dem Beschlagunterteil 303 kommen. Das Kulissenblech 333 wird dadurch vom Beschlagoberteil 302 abgekoppelt und an das Beschlagunterteil angekoppelt.

Wird beim Freischwenken die Rückenlehne versehentlich nach hinten gedrückt, so drücken die Nasen 323 gegen die dritten Federarme 343. Wird die dadurch auf das Kulissenblech 333 wirkende Kraft zu groß, lösen sich die ersten Federarme 341 von der Verzahnung auf der zweiten Begrenzungsfläche 310", und das Kulissenblech 333 kann sich frei drehen. Der Rastbeschlag 301 ist dadurch vor Beschädigungen geschützt.

Bei dem erfindungsgemäßen Rastbeschlag können die unterschiedlichen Baugruppen der beschriebenen Ausführungsbeispiele in Kombinationen oder Unterkombinationen nach dem Prinzip eines Baukastens zusammengesetzt werden. Beispielsweise kann der Rastbeschlag so ausgebildet sein, daß er sowohl einen Ring gemäß dem dritten Ausführungsbeispiel als auch ein Kulissenblech gemäß dem vierten Ausführungsbeispiel aufweist.

## Patentansprüche

1. Rastbeschlag für einen Fahrzeugsitz, insbesondere für einen Kraftfahrzeugsitz, mit einem Beschlagunterteil (3; 103;-203; 303), einem mittels des Beschlagunterteils (3; 103; 203; 303) gelagerten Beschlagoberteil (2; 102; 202; 302) und zwei um 180° versetzten als Zahnsegmente ausgebildeten Riegeln (13; 113; 213; 313), die zum Einrasten des Rastbeschlags (1; 101; 201; 301) mit einem an einem Beschlagteil (2; 102; 202; 302) auf einer Begrenzungsfläche (2", 102"; 202"; 302") ausgebildeten Zahnkreuz zusammenwirken und die zwischen Beschlagoberteil (2; 102; 202; 302) und Beschlagunterteil (3; 103; 203; 303) in einer Führung (15; 115; 215; 315) in radialer Richtung verschieblich geführt sind, welche zugleich das Lager für die Lagerung von Beschlagunterteil (3; 103; 203; 303) und Beschlagoberteil (2; 102; 202; 302) bildet, **gekennzeichnet durch** eine drehbare Exzenterscheibe (11; 111; 211; 311), welche federbelastet unter Vorspannung die beiden gleich ausgebildeten Riegel (13; 113; 213; 313) radial nach außen drückt, und **durch** eine drehbare Steuerscheibe (19; 119; 219; 319), welche seitlich zur Bewegungsrichtung der Riegel (13; 113; 213; 313) an diesen anliegt und zwei Kulissen (21; 121; 221; 321) aufweist, innerhalb derer je eine Rastnase (23; 123; 223; 323) jedes Riegels (13; 113; 213; 313) liegt, und welche die radiale Bewegung der beiden Riegel (13; 113; 213; 313) begrenzt und die beiden Riegel (13; 113; 213; 313) mittels der Kulissen (21; 121; 221; 321) und Rastnasen (23; 123; 223; 323) radial nach innen zieht.

2. Rastbeschlag nach Anspruch 1, **dadurch gekennzeichnet, daß** bei einem Beschlagteil (2; 102; 202; 302) eine ringförmige Vertiefung vorgesehen ist, die einen Bauraum (10; 110; 210; 310) definiert, innerhalb dessen die Exzenterscheibe (11; 111; 211; 311), die Steuerscheibe (19; 119; 219; 319), die beiden Riegel (13; 113; 213; 313), die Führung (15; 115; 215; 315) und die Drehung der Exzenterscheibe (11; 111; 211; 311) unterstützende Spiralfedern (17; 117; 217; 317) angeordnet sind.

3. Rastbeschlag nach Anspruch 2, **dadurch gekennzeichnet, daß** die den Zahnkranz aufweisende Begrenzungsfläche (2"; 102"; 202"; 302") zugleich die Anlagefläche für die Führung (15; 115; 215; 315) bildet.

4. Rastbeschlag nach einem der Ansprüche 1 bis 3, **dadurch gekennzeichnet, daß** Mittel (8; 108, 111, 111", 125; 211"; 225) zum Ausgleich von Toleranzen vorgesehen sind.

5. Rastbeschläg nach Anspruch 4, **dadurch gekennzeichnet, daß** die Steuerscheibe (119; 219) wenigstens eine Zunge (125; 225) zum Toleranzausgleich und zum Vorspannen in Richtung auf den Riegel (113; 213) zu aufweist.

6. Rastbeschlag nach Anspruch 4 oder 5, **dadurch gekennzeichnet, daß** die Exzenterscheibe (11; 111; 211; 311) auf einem Übertragungselement (8; 108; 208; 308) sitzt, wobei zwischen einem Außenprofil des Übertragungselementes (8; 108; 208; 308) und einem Innenprofil der Exzenterscheibe (11; 111; 211; 311) ein Spiel zum Toleranzausgleich vorgesehen ist.

7. Rastbeschlag nach einem der Ansprüche 1 bis 6, **gekennzeichnet durch** ein Mittel (229; 333), das ein Wirksamwerden der Riegel (213; 313) auf bestimmte Winkelstellungen zwischen Beschlagoberteil (202; 302) und Beschlagunterteil (203; 303) beschränkt.

8. Rastbeschlag nach Anspruch 7, **dadurch gekennzeichnet, daß** als Mittel eine sich über mehrere zusammenhängende Winkelstellungen hinweg erstreckende Anschlagsbahn (229; 333) vorgesehen ist, welche radial unterschiedlich weit außen gelegene Teilbereiche (229', 229"; 344, 345) aufweist und mit einem Teil (223; 323) des Riegels (213; 313) zusammenwirkt, wobei die Anschlagsbahn (229; 333) an einem gesondert ausgebildeten Teil (227; 333) vorgesehen ist, welches am Beschlagoberteil (202; 302) verdrehsicher angeordnet oder festlegbar ist.

9. Rastbeschlag nach einer der Ansprüche 1 bis 8, **gekennzeichnet durch** ein Element (333), das entweder an das Beschlagunterteil (303) oder an das Beschlagoberteil (302) koppelbar ist.

10. Rastbeschlag nach Anspruch 9, **dadurch gekennzeichnet, daß** das Element (333) erste Arme (341) zur Kopplung an das Beschlagoberteil (302) und zweite Arme (342) zur Kopplung an das Beschlagunterteil (303) aufweist, und daß ein Schaltblech (331) zum Abkoppeln der Arme (341, 342) von dem jeweiligen Beschlagteil (302, 303) vorgesehen ist.

11. Fahrzeugsitz mit wenigstens einem Rastbeschlag nach einem der Ansprüche 1 bis 10.

## Claims

1. Locking fitting for a vehicle seat, in particular for a motor vehicle seat, having a lower fitting member (3; 103; 203; 303), an upper fitting member (2; 102; 202; 302), which is supported by means of the lower fitting member (3; 103; 203; 303), and two locking elements (13; 113; 213; 313) which are displaced through 180° and which are in the form of toothed segments and which co-operate with a toothed ring, which is constructed on a limiting face (2"; 102"; 202"; 302") on a fitting member (2; 102; 202; 302) in order to engage the locking fitting (1; 101; 201; 301) and which are guided displaceably in a radial direction between the upper fitting member (2; 102; 202; 302) and the lower fitting member (3; 103; 203; 303) in a guide (15; 115; 215; 315) which simultaneously forms the bearing for supporting the lower fitting member (3; 103; 203; 303) and the upper fitting member (2; 102; 202; 302), **characterised by** a rotatable cam disc (11; 111; 211; 311) which presses the two identically formed locking elements (13; 113; 213; 313) radially outwards with pretension and by a rotatable control disc (19; 119; 219; 319) which abuts the locking elements (13; 113; 213; 313) laterally relative to the direction of movement of the locking elements (13; 113; 213; 313) and which has two slotted members (21; 121; 221; 321), in each of which a locking projection (23; 123; 223; 323) of each locking element (13; 113; 213; 313) is located, and which limits the radial movement of the two locking elements (13; 113; 213; 313) and draws the two locking elements (13; 113; 213; 313) radially inwards by means of the slotted members (21; 121; 221; 321) and locking projections (23; 123; 223; 323).

2. Locking fitting according to claim 1, **characterised in that** an annular recess is provided in a fitting member (2; 102; 202; 302) and defines a structural space (10; 110; 210; 310), within which the cam disc (11; 111; 211; 311), the control disc (19; 119; 219; 319), the two locking elements (13; 113; 213; 313), the guide (15; 115; 215; 315) and the helical springs (17; 117; 217; 317) which support rotation of the cam disc (11; 111; 211; 311) are arranged.

3. Locking fitting according to claim 2, **characterised in that** the limiting face (2''; 102''; 202''; 302'') which has the toothed ring forms the abutment face for the guide (15; 115; 215; 315) at the same time.

4. Locking fitting according to any one of claims 1 to 3, **characterised in that** means (8; 108, 111, 111" , 125; 211''; 225) are provided in order to compensate for tolerances.

5. Locking fitting according to claim 4, **characterised in that** the control disc (119; 219) has at least one tongue (125; 225) for tolerance compensation and for pretensioning in the direction towards the locking element (113; 213).

6. Locking fitting according to claim 4 or 5, **characterised in that** the cam disc (11; 111; 211; 311) is located on a transmission element (8; 108; 208; 308), play being provided in order to compensate for tolerances between an outer profile of the transmission element (8; 108; 208; 308) and an inner profile of the cam disc (11; 111; 211; 311).

7. Locking fitting according to any one of claims 1 to 6, **characterised by** a means (229; 333) which restricts activation of the locking elements (213; 313) to given angular positions between the upper fitting member (202; 302) and the lower fitting member (203; 303).

8. Locking fitting according to claim 7, **characterised in that** a stop path (229; 333) which extends over a plurality of associated angular positions is provided as the means and has part-regions (229', 229''; 344, 345), which have different radially outward positions, and co-operates with a portion (223; 323) of the locking element (213; 313), the stop path (229; 333) being provided on a separately constructed element (227; 333) which is arranged on or can be fixed to the upper fitting member (202; 302) in a rotationally secure manner.

9. Locking fitting according to any one of claims 1 to 8, **characterised by** an element (333) which can be connected either to the lower fitting member (303) or the upper fitting member (302).

10. Locking fitting according to claim 9, **characterised in that** the element (333) has first arms (341) for engagement with the upper fitting member (302) and second arms (342) for engagement with the lower fitting member (303), and **in that** a switching plate (331) is provided in order to disengage the arms (341, 342) from the respective fitting member (302, 303).

11. Vehicle seat having at least one locking fitting according to any one of claims 1 to 10.

## Revendications

1. - Armature d'arrêt pour siège de véhicule, notamment pour siège de véhicule automobile avec une partie inférieure d'armature (3 ; 103 ; 203 ; 303), une partie supérieure d'armature (2 ; 102 ; 202 ; 302) montée au moyen de la partie inférieure d'armature (3 ; 103 ; 203 ; 303) et deux verrous (13 ; 113 ; 213 ; 313) réalisés sous la forme de segments dentés décalés de 180°, qui, pour le verrouillage de l'armature d'arrêt (1 ; 101 ; 201 ; 301) coopèrent avec une couronne dentée formée sur une partie d'armature (2 ; 102 ; 202 ; 302) sur une surface de délimitation (2" ; 102" ; 202" ; 302") et qui sont guidés de manière coulissante en direction radiale dans un guide (15 ; 115 ; 215 ; 315), entre la partie supérieure d'armature (2 ; 102 ; 202 ; 302) et la partie inférieure d'armature (3 ; 103 ; 203 ; 303), ledit guide formant en même temps le palier pour le montage de la partie inférieure d'armature (3 ; 103 ; 203 ; 303) et de la partie supérieure d'armature (2 ; 102 ; 202 ; 302), **caractérisée par** une came excentrique (11 ; 111 ; 211 ; 311) pouvant tourner, laquelle comprime radialement vers l'extérieur les deux verrous (13 ; 113 ; 213 ; 313) configurés de manière identique lorsqu'elle est prétendue et par une came de commande (19 ; 119 ; 219 ; 319) pouvant tourner, laquelle latéralement au sens de déplacement des verrous (13 ; 113 ; 213 ; 313) porte sur ceux-ci et présente deux coulisses (21 ; 121 ; 221 ; 321) à l'intérieur desquelles s'étend à chaque fois un ergot d'encliquetage (23 ; 123 ; 223 ; 323) de chaque verrou (13 ; 113 ; 213 ; 313), et qui délimite le mouvement radial des deux verrous (13 ; 113 ; 213 ; 313) et tire les deux verrous (13 ; 113 ; 213 ; 313) radialement vers l'intérieur au moyen des coulisses (21 ; 121 ; 221 ; 321) et des ergots d'encliquetage (23 ; 123 ; 223 ; 323).

2. - Armature d'arrêt selon la revendication 1, **caractérisée par le fait qu'**un renfoncement de forme annulaire est prévu au niveau d'une partie d'armature (2 ; 102 ; 202 ; 302), lequel définit un espace (10 ; 110 ; 210 ; 310) à l'intérieur duquel sont disposés la came excentrique (11 ; 111 ; 211 ; 311), la came de commande (19 ; 119 ; 219 ; 319), les deux verrous (13 ; 113 ; 213 ; 313) et le guide (15 ; 115 ; 215 ; 315) et les ressorts spiraux (17 ; 117 ; 217 ; 317) assistant la rotation de la came excentrique (11 ; 111 ; 211 ; 311).

3. - Armature d'arrêt selon la revendication 2, **caractérisée par le fait que** la surface de délimitation (2" ; 102" ; 202'' ; 302") présentant la couronne dentée forme en même temps la surface d'appui du guide (15 ; 115 ; 215 ; 315).

4. - Armature d'arrêt selon l'une quelconque des revendications 1 à 3, **caractérisée par le fait que** des moyens (8 ; 108, 111, 111'', 125 ; 211" ; 225) sont prévus pour compenser les tolérances.

5. - Armature d'arrêt selon la revendication 4, **caractérisée par le fait que** la came de commande (119 ; 219) présente au moins une languette (125 ; 225) pour compenser les tolérances et pour effectuer la prétension en direction du verrou (113 ; 213).

6. - Armature d'arrêt selon l'une des revendications 4 ou 5, **caractérisée par le fait que** la came excentrique (11 ; 111 ; 211 ; 311) est placée sur un élément de transmission (8 ; 108 ; 208 ; 308), à l'occasion de quoi, entre un profil externe de l'élément de transmission (8 ;108 ; 208 ; 308) et un profil interne de la came excentrique (11 ; 111 ; 211 ; 311), il est prévu un jeu pour compenser les tolérances.

7. - Armature d'arrêt selon l'une quelconque des revendications 1 à 6, **caractérisée par** un moyen (229 ; 333) qui limite l'efficacité des verrous (213 ; 313) dans certaines positions angulaires, entre la partie supérieure d'armature (202 ; 302) et la partie inférieure d'armature (203 ; 303).

8. - Armature d'arrêt selon la revendication 7, **caractérisée par le fait qu'** un moyen prévu est un rail de butée (229 ; 333) s'étendant vers l'extérieur sur plusieurs positions angulaires contiguës, ledit rail de butée présentant des zones partielles (229', 229" ; 344, 345) disposées radialement vers l'extérieur à des distances différentes et entre en prise avec une partie (223 ; 323) du verrou (213 ; 313), moyennant quoi le rail de butée (229 ; 333) est prévu au niveau d'une partie (227 ; 333) configurée à part, laquelle est définie ou disposée de manière à ne pas tourner au niveau de la partie supérieure est prévue pour découpler les bras (d'armature (202 ; 302).

9. - Armature d'arrêt selon l'une quelconque des revendications 1 à 8, **caractérisée par** un élément (333) couplé soit à la partie inférieure d'armature (303) soit à la partie supérieure d'armature (302).

10. - Armature d'arrêt selon la revendication 9, **caractérisée par le fait que** l'élément (333) présente des premiers bras (341) pour un couplage à la partie supérieure d'armature (302) et des deuxièmes bras (342) pour un couplage à la partie inférieure d'armature (303) et **par le fait qu'**une plaque de commande (331) 341, 342) de la partie d'armature (302, 303) respective.

11. - Siège de véhicule avec au moins une armature d'arrêt telle que définie à l'une quelconque des revendications 1 à 10.
